(19) Europäisches Patentamt
European Patent Office
Office européen des brevets

(11) **EP 4 704 205 A1**

(12) **EUROPEAN PATENT APPLICATION**
published in accordance with Art. 153(4) EPC

(43) Date of publication:
**04.03.2026 Bulletin 2026/10**

(21) Application number: **23939284.8**

(22) Date of filing: **10.11.2023**

(51) International Patent Classification (IPC):
**H01M 10/0565** (2010.01)   **H01M 10/056** (2010.01)
**H01M 10/05** (2010.01)

(52) Cooperative Patent Classification (CPC):
Y02E 60/10

(86) International application number:
**PCT/CN2023/131060**

(87) International publication number:
**WO 2024/244313 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.05.2023 CN 202310618657**

(71) Applicant: **Contemporary Amperex Technology
Co., Limited
Ningde, Fujian 352100 (CN)**

(72) Inventors:
• **NING, Ziyang
Ningde, Fujian 352100 (CN)**
• **HU, Bobing
Ningde, Fujian 352100 (CN)**
• **LIU, Chengyong
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **GEL POLYMER ELECTROLYTE, BATTERY AND ELECTRIC DEVICE**

(57) The present application discloses a gel polymer electrolyte, a battery and an electrical apparatus. The gel polymer electrolyte comprises an electrolyte, wherein heat-conducting particles are dispersed in the electrolyte and have a heat conductivity coefficient greater than or equal to 400 W/mK at 25°C.

FIG. 1

**Description**

**TECHNICAL FIELD**

The present application relates to the technical field of batteries, and in particular to a gel polymer electrolyte, a battery and an electrical apparatus.

**BACKGROUND**

Lithium-ion batteries have characteristics such as green, environmental protection, high energy and low carbon, are not only applied in energy storage power source systems such as hydraulic, thermal, wind and solar power stations but also widely applied in electric vehicles such as electric bicycles, electric motorcycles and electric cars, as well as military equipment, aerospace and the like fields. With the development of current society, people's requirements for lithium-ion batteries are getting higher and higher, and more and more researches on semi-solid-state batteries have been conducted.

**SUMMARY**

In view of the technical problems in the BACKGROUND, the present application provides a gel polymer electrolyte, aiming to improve curing uniformity of a gel polymer matrix.

In order to achieve the above objective, a first aspect of the present application provides a gel polymer electrolyte including an electrolyte, wherein heat-conducting particles are dispersed in the electrolyte and have a heat conductivity coefficient greater than or equal to 400 W/mK at 25°C.

The gel polymer electrolyte of the present application has at least the following beneficial effects: the introduction of the heat-conducting particles into the electrolyte may improve temperature uniformity of the electrolyte, thereby improving the curing uniformity of the polymer matrix during an in-situ polymerization reaction and improving the impedance and elasticity modulus of the gel polymer electrolyte matrix as well as kinetic performance of a battery.

In some embodiments of the present application, the heat-conducting particles have an electrical conductivity not greater than $10^{-7}$ S/cm at 25°C, and optionally $10^{-16}$ S/cm to $10^{-7}$ S/cm. The electrical conductivity of the heat-conducting particles is controlled within the given range, which is less prone to increasing electronic conductivity of the electrolyte and will not cause a significant change in ionic conductivity of the electrolyte.

In some embodiments of the present application, the heat conductivity coefficient is 400 W/mK to 2000 W/mK.

In some embodiments of the present application, the heat-conducting particles include diamond-like carbon. The condition is satisfied such that the heat-conducting particles have a high heat conductivity coefficient and a low conductivity, which is conducive to improving the curing uniformity of the polymer matrix during the in-situ polymerization reaction, is less prone to increasing the probability of battery self-discharge, and is conducive to improving kinetic performance of the battery.

In some embodiments of the present application, based on the total number of atoms of the diamond-like carbon, an atomic percent of hydrogen in the diamond-like carbon is less than or equal to 50 at%, optionally less than or equal to 20 at%, and optionally less than or equal to 10 at%. The hydrogen content in the diamond-like carbon is controlled within the given range, which is conducive to improving the curing uniformity of the polymer matrix during the in-situ polymerization reaction, is less prone to increasing the probability of battery self-discharge, and is conducive to improving kinetic performance of the battery.

In some embodiments of the present application, based on the total number of atoms of carbon in the diamond-like carbon, an atomic percent of $sp^3$-bonded carbon in the diamond-like carbon is 20 at% to 85 at%, and optionally 70 at% to 85 at%. The content of the $sp^3$-bonded carbon in the diamond-like carbon is controlled within the given range, which is conducive to improving the curing uniformity of the polymer matrix during the in-situ polymerization reaction, is less prone to increasing the probability of battery self-discharge, is conducive to improving kinetic performance of the battery, and balancing difficulty and cost of preparation of the diamond-like carbon.

In some embodiments of the present application, the heat-conducting particles have a particle size less than or equal to 10 $\mu$m. The particle size of the heat-conducting particles is controlled within the given range, which is not only conducive to improving the temperature uniformity of the electrolyte and the curing uniformity of the gel polymer matrix but also conducive to providing the battery a good electrochemical performance.

In some embodiments of the present application, based on the total mass of the gel polymer electrolyte, the heat-conducting particles have a concentration of 0.1 wt% to 5 wt%, and optionally 0.5 wt% to 2 wt%. The concentration of the heat-conducting particles in the electrolyte is controlled within the given range, which is not only conducive to enhancing the improvement effect of the heat-conducting particles on the curing uniformity of the gel polymer matrix but also conducive to obtaining a good active ion transport effect.

In some embodiments of the present application, the gel polymer electrolyte further includes a gel polymer matrix, the heat-conducting particles being dispersed on the gel polymer matrix.

A second aspect of the present application provides a battery including a gel polymer electrolyte in the first aspect of the present application. The battery of the present application has the characteristics and effects described in the gel polymer electrolyte of the first aspect of the present application. In general, the battery has good kinetic performance.

In some embodiments of the present application, the battery further includes a positive electrode plate, a negative electrode plate and a separator, at least one of the positive electrode plate, the negative electrode plate and the separator including heat-conducting particles. The condition is satisfied, which is conducive to further improving the temperature uniformity of the electrolyte and the curing uniformity of the polymer matrix during the in-situ polymerization reaction.

In some embodiments of the present application, the positive electrode plate includes a positive electrode current collector and a positive electrode active material layer arranged on the positive electrode current collector, the positive electrode active material layer including the heat-conducting particles. The heat-conducting particles are provided in the positive electrode active material layer, which is not only conducive to further improving the curing uniformity of the polymer matrix during the in-situ polymerization reaction but also conducive to improving the heat dissipation effect and temperature uniformity of the battery during use.

In some embodiments of the present application, the negative electrode plate includes a negative electrode current collector and a negative electrode active material layer arranged on the negative electrode current collector, the negative electrode active material layer including the heat-conducting particles; or the negative electrode plate includes a negative electrode current collector and a heat-conducting layer arranged on the negative electrode current collector, the heat-conducting layer including the heat-conducting particles. The negative electrode plate includes the heat-conducting particles, which is not only conducive to further improving the curing uniformity of the polymer matrix during the in-situ polymerization reaction but also conducive to improving the heat dissipation effect and temperature uniformity of the battery during use.

In some embodiments of the present application, the heat-conducting particles have a weight percent of 0.1 wt% to 2 wt% in the positive electrode active material layer. The weight percent of the heat-conducting particles in the positive electrode active material layer is controlled within the given range, which is not only conducive to further improving the curing uniformity of the gel polymer matrix and the heat dissipation effect of the battery but also conducive to balancing electrical conductivity of the positive electrode plate and energy density of the battery.

In some embodiments of the present application, the heat-conducting particles have a weight percent of 0.1 wt% to 4 wt% in the negative electrode active material layer. The weight percent of the heat-conducting particles in the negative electrode active material layer is controlled within the given range, which is not only conducive to further improving the curing uniformity of the gel polymer matrix and the heat dissipation effect of the battery but also conducive to balancing electrical conductivity of the negative electrode plate and energy density of the battery.

In some embodiments of the present application, the negative electrode active material layer includes a silicon material, and a silicon element has a weight percent greater than or equal to 10 wt% in the negative electrode active material layer. The weight percent of the silicon element in the negative electrode active material layer is controlled to meet the given range, which is conducive to improving the energy density of the negative electrode plate and the battery.

In some embodiments of the present application, the heat-conducting layer has a thickness of 50 nm to 5 μm; and/or the heat-conducting particles have a weight percent greater than or equal to 50 wt% in the heat-conducting layer. The given condition is satisfied, which is not only conducive to further improving the curing uniformity of the gel polymer matrix and the heat dissipation effect of the battery but also conducive to balancing the electrical conductivity of the negative electrode plate and the energy density of the battery.

In some embodiments of the present application, the heat-conducting layer further includes a conductive agent and/or a binder, the conductive agent having a weight percent of 0.1 wt% to 40 wt%, and optionally 5 wt% to 15 wt% in the heat-conducting layer, and the binder having a weight percent of 0.01 wt% to 5 wt% in the heat-conducting layer. The content of the conductive agent and/or binder in the heat-conducting layer is controlled within the given range, which is not only conducive to further improving the curing uniformity of the gel polymer matrix and the heat dissipation effect of the battery but also conducive to balancing the electrical conductivity of the negative electrode plate and adhesion of a conductive layer.

In some embodiments of the present application, the weight percent of the heat-conducting particles in the electrolyte is greater than or equal to the weight percent of the heat-conducting particles in the negative electrode active material layer. The given condition is satisfied, which is conducive to further enhancing the improvement effect on the curing uniformity of the gel polymer matrix and the heat dissipation of the battery, and is also conducive to taking into account the energy density of the battery.

In some embodiments of the present application, the weight percent of the heat-conducting particles in the negative electrode active material layer is greater than or equal to the weight percent of the heat-conducting particles in the positive electrode active material layer. The given condition is satisfied, which is conducive to further enhancing the improvement effect on the curing uniformity of the gel polymer matrix and the heat dissipation of the battery.

A third aspect of the present application provides an electrical apparatus including a battery in the second aspect of the present application.

Additional aspects and advantages of the present application will be set forth in part in the description which follows, and in part will be obvious from the description which follows, or may be learned by practice of the present application.

## BRIEF DESCRIPTION OF DRAWINGS

The above and/or additional aspects and advantages of this application will become obviously easy to understand from the description of the embodiments with reference to the following drawings:

Fig. 1 is a schematic structural view of a battery according to an embodiment of the present application;
Fig. 2 is a schematic structural view of a battery module according to an embodiment of the present application;
Fig. 3 is a schematic structural view of a battery pack according to an embodiment of the present application;
Fig. 4 is an exploded view of a battery pack according to an embodiment of the present application; and
Fig. 5 is a schematic view of an embodiment of an electrical apparatus using a battery as a power source according to an embodiment of the present application.

Reference signs:

1. secondary battery; 2. battery module; 3. battery pack; 4. upper box body; 5. lower box body.

## DETAILED DESCRIPTION

The following describes the present application in further detail with reference to specific implementations. It should be understood that these examples are only used for illustrating the present application, rather than limiting the scope of the present application.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

A "range" disclosed in the present application is defined in the form of a lower limit and/or an upper limit, with a given range being defined by the selection of a lower limit and/or an upper limit, and the selected lower and/or upper limits defining the boundaries of the particular range. A range defined in this manner may be inclusive or exclusive of end values, and may be arbitrarily combined, that is, any lower limit may be combined with any upper limit to form a range not explicitly recited; and any lower limit can be combined with another lower limit to form a range not explicitly recited, and likewise, any upper limit can be combined with any another upper limit to form a range not explicitly recited. Additionally, each individually disclosed point or single numerical value may itself serve as a lower or upper limit to form a range not explicitly recited by combining with any other point or single numerical value, or with other lower or upper limits.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specifically stated, the terms "comprising" and "including" mentioned in the present application may be open-ended, or may be closed-ended. For example, the "including" and "comprising" may indicate that it may further include or comprise other components not listed, and it may include or comprise only the listed components. Moreover, in the present application, the terms "plurality" and "multiple" refer to two or more.

Unless otherwise stated, in the present application, the term "and/or" is only an association relation describing associated objects, which means that there may be three relations. For example, A and/or B may represent three situations: A exists alone, both A and B exist, and B exists alone. In addition, the character "/" herein generally represents that previous and next associated objects form an "or" relationship.

Unless otherwise defined, all technical and scientific terms used in the present application have the same meanings as those commonly understood by those skilled in the art belonging to the technical field of the present application. The terms used in the present application are only for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions. Unless otherwise specified, terms used in this application have well-known meanings generally understood by persons skilled in the art. Unless otherwise specified, numerical values of parameters mentioned in this application may be measured by using various measurement methods commonly used in the art (for example, testing may be performed by using a method provided in the embodiments of this application).

With the continuous advancement of the green theme, the application of lithium-ion batteries has penetrated into every aspect of life, including vehicles, electronic equipment, energy storage devices and the like. However, as the application continues to deepen, some of potential problems have also received more attention. Traditional liquid electrolytes have low boiling points and are prone to leakage, which is easy to cause problems such as lithium dendrite growth and liquid leakage. The state of a gel polymer electrolyte is between a liquid electrolyte and a solid electrolyte, which is conducive to alleviating the problems such as leakage of the electrolyte and the lithium dendrite growth.

At present, when the gel polymer electrolyte is used for a battery, a polymerized monomer and/or prepolymer of a gel polymer matrix is usually mixed with a solvent, a lithium salt, an initiator and the like to form a liquid-phase solution; the liquid-phase solution is injected into a battery case provided with an electrode assembly and then encapsulated; and the polymerized monomer and/or prepolymer is subjected to an in-situ polymerization reaction at a high temperature, and is cured to form a gel-like three-dimensional mesh structure. However, since the gel polymer is prone to the problem of uneven heat conduction in an in-situ curing process, the uneven heat conduction is prone to the in-situ polymerization reaction performed unevenly, and there may exist a situation in which some areas have a very high degree of polymerization while some areas have a low degree of polymerization or even almost no polymerization, which is easy to lead to problems such as increases in internal resistance and polarization and decreases in cycling capacity retention rate and cycle life of the battery, affecting kinetic performance of the battery.

In the present application, uniformity of the gel polymer matrix in the in-situ curing process can be improved by introducing the heat-conducting particles into the electrolyte. Moreover, a heat conductivity coefficient of the heat-conducting particles is controlled to be greater than or equal to 400 W/mK at 25°C, which is conducive to obtaining a good improvement effect.

The gel polymer electrolyte disclosed in the embodiments of the present application is applicable to a gel-state battery, i.e., a semi-solid state battery. The battery disclosed in the embodiments of the present application can be used in an electrical apparatus that uses a battery as the power source or in various energy storage systems that use batteries as energy storage elements. The electrical apparatus may include, but is not limited to, a mobile phone, a tablet, a laptop, an electric toy, an electric tool, a battery car, an electric vehicle, a ship, a spacecraft, and the like. Electric toys can include fixed or mobile electric toys, e.g., game consoles, electric car toys, electric ship toys, and electric airplane toys, etc., and the spacecraft can include airplanes, rockets, space shuttles, and spaceships, etc.

A first aspect of the present application provides a gel polymer electrolyte including an electrolyte, wherein heat-conducting particles are dispersed in the electrolyte and have a heat conductivity coefficient greater than or equal to 400 W/mK at 25°C.

Here, the heat conductivity coefficient of the heat-conducting particles may be tested using a transient plane source method, which may be carried out with reference to GB/T 32064-2015, and specifically may be tested at 25°C in a test environment with atmospheric pressure. As some specific examples, the heat conductivity coefficient of the heat-conducting particles at 25°C may be greater than or equal to 400 W/mK, greater than or equal to 700 W/mK, greater than or equal to 1000 W/mK, greater than or equal to 1300 W/mK, greater than or equal to 1600 W/mK, greater than or equal to 2000 W/mK, greater than or equal to 2500 W/mK, etc., or may be in a range consisting of any of the above values. In practical operations, during testing of the heat conductivity coefficient of the heat-conducting particles in the electrolyte of the battery, the heat-conducting particles can be prepared by the following method: disassembling a battery to obtain a gel polymer electrolyte, separating an electrolyte from a gel polymer matrix (e.g., centrifuging by a centrifuge), filtering, and drying to extract solid particles.

The introduction of the heat-conducting particles into the electrolyte is conducive to improving temperature uniformity of the electrolyte in different regions of the battery case to further improve uniformity of the polymerized monomer and/or prepolymer used for forming the gel polymer matrix during the in-situ polymerization reaction at different positions, thereby improving thickness uniformity and structure consistency of the gel polymer matrix between a positive electrode and a negative electrode, reducing impedance of the gel polymer matrix, and improving kinetic performance of the battery. Moreover, the increase in the heat conductivity coefficient of the heat-conducting particles is also conducive to enhancing the improvement effect on curing uniformity of the gel polymer matrix.

As some specific examples, the curing uniformity of the gel polymer matrix can be tested by means of an atomic force microscope in a mechanical mode or an electrochemical mode. For example, the test may include the following operations: disassembling a battery containing a gel polymer electrolyte and removing a separator containing the cured gel polymer electrolyte, placing the separator on a stainless steel plate, and connecting the stainless steel to a counter electrode of the atomic force microscope in the electrochemical mode, thereby forming a test path. By means of the atomic force microscope, it is possible to take points by a 10×10 array in the separator with an area of 5cm×5cm. The test is carried out by means of the atomic force microscope in the mechanical mode, so that elasticity modulus E of each test point can be obtained. The impedance test is carried out by the atomic force microscope in the electrochemical mode, so that local AC impedance Z can be obtained. The distribution uniformity of the elasticity modulus and electrochemical impedance may reflect the curing uniformity of the gel polymer electrolyte. Distribution uniformity $A_E$ of the elasticity modulus and distribution uniformity $A_Z$ of the electrochemical impedance can be evaluated by the following equations, respectively:

$$A_E = \frac{\sigma_E}{\overline{E}} = \frac{\sqrt{\frac{1}{100}\sum_{i=1}^{100}(E_i - \overline{E})^2}}{\frac{1}{100}\sum_{i=1}^{100} E_i}$$

$$A_Z = \frac{\sigma_Z}{\overline{Z}} = \frac{\sqrt{\frac{1}{100}\sum_{i=1}^{100}(Z_i - \overline{Z})^2}}{\frac{1}{100}\sum_{i=1}^{100} Z_i}$$

where $\sigma_E$ is the squared average of differences between elasticity modulus at different test points on the separator and arithmetic mean elasticity modulus at all test points; $\overline{E}$ is the average of elasticity modulus at 100 test points selected on the separator; $E_i$ is elasticity modulus at an ith test point selected on the separator; and $E_i$, $\sigma_E$, $\overline{E}$ and $E_i$ have the same unit. $\sigma_Z$ is the squared average of differences between impedance at different test points on the separator and arithmetic average impedance of all test points; $\overline{Z}$ is the arithmetic average of impedance at 100 test points selected on the separator; $Z_i$ is the elasticity modulus at the ith test point selected on the separator; and $\sigma_Z$, $\overline{Z}$, $Z_i$ have the same unit. When both $A_E$ and $A_Z$ are less than 0.2, it is determined that the gel polymer electrolyte matrix is uniformly cured; when at least one of $A_E$ and $A_Z$ is greater than 0.2, it is determined that the gel polymer electrolyte matrix is unevenly cured.

The gel polymer electrolyte of the present application has at least the following beneficial effects: the introduction of heat-conducting particles into the electrolyte may improve temperature uniformity of the electrolyte, thereby improving the curing uniformity of the polymer matrix during the in-situ polymerization reaction and improving the impedance and elasticity modulus of the gel polymer electrolyte matrix as well as kinetic performance of the battery; besides, it is also conducive to improving heat dissipation uniformity of the battery during use on the basis of improving the temperature uniformity of the electrolyte.

Furthermore, on the basis of satisfying the above conditions, the gel polymer electrolyte in the first aspect of the present application has the advantages that the range of electrical conductivity of the heat-conducting particles, the range of heat conductivity coefficient, as well as the type, composition and particle size of the heat-conducting particles, and the dispersion concentration of the heat-conducting particles in the gel polymer electrolyte can be further controlled to further optimize performance of the gel polymer electrolyte. That is, on the basis of satisfying the above conditions, one or more of the following conditions can also be optionally satisfied.

In some embodiments of the present application, the heat conductivity coefficient of the heat-conducting particles may be 400 W/mK to 2000 W/mK.

For example, the heat conductivity coefficient of the heat-conducting particles may be 400 W/mK, 500 W/mK, 700 W/mK, 900 W/mK, 1100 W/mK, 1300 W/mK, 1500 W/mK, 1700 W/mK, 1900 W/mK, or 2000 W/mK, etc., or may be in a range consisting of any of the above values. The increase in the heat conductivity coefficient of the heat-conducting particles is conducive to enhancing the improvement effect on the curing uniformity of the gel polymer matrix. The heat conductivity coefficient of the heat-conducting particles is mainly dependent on their material and structure, and as the heat conductivity coefficient increases, the cost and/or difficulty in material selection increases accordingly.

The heat conductivity coefficient of the heat-conducting particles is controlled within the given range, which is not only conducive to enhancing the improvement effect on the curing uniformity of the gel polymer matrix but also conducive to decreasing the cost and/or the difficulty in material selection of the heat-conducting particles.

In some embodiments of the present application, the heat-conducting particles have an electrical conductivity not greater than $10^{-7}$ S/cm at 25°C, and optionally $10^{-16}$ S/cm to $10^{-7}$ S/cm.

For example, the electrical conductivity of the heat-conducting particles at 25°C may be less than or equal to $10^{-7}$ S/cm, less than or equal to $10^{-8}$ S/cm, less than or equal to $10^{-9}$ S/cm, less than or equal to $10^{-10}$ S/cm, less than or equal to $10^{-11}$ S/cm, less than or equal to $10^{-12}$ S/cm, less than or equal to $10^{-16}$ S/cm, etc. or may be in a range consisting of any of the above values. The electrical conductivity of the heat-conducting particles can be tested by referring to a volumetric conductivity testing method in GB/T 1410-2006, which can be tested at 25°C in a test environment with atmospheric pressure, specifically. In practical operations, during testing of the heat conductivity coefficient of the heat-conducting particles in the electrolyte of the battery, the battery can be disassembled to obtain a gel polymer electrolyte and separate out the heat-conducting particles. The specific separation method has been described in the previous section, and will not be repeated here. In a battery system, it is expected that the electrolyte has a high ionic conductivity and as low an electronic conductivity as possible, and in order to reduce the probability of battery self-discharge, it is expected that additives in an electrolyte system do not conduct electricity and do not increase the electronic conductivity of the electrolyte. For the heat-conducting particles, the lower the electrical conductivity, the poor the electrical conduction, and the lower the probability that the battery short-circuits to result in the self-discharge after the heat-conducting particles are added into the electrolyte. The electrical conductivity of the heat-conducting particles is controlled to meet the given range, which is less prone to increasing the electronic conductivity of the electrolyte and reduces the probability of battery self-discharge; moreover, the heat-conducting particles that satisfy this condition are less prone to lithiation during charging and discharging, and their ionic conductivity will not vary significantly after the heat-conducting particles are added into the electrolyte.

Optionally, the electrical conductivity of the heat-conducting particles at 25°C may be $10^{-16}$ S/cm to $10^{-7}$ S/cm, for example, it may be $10^{-7}$S/cm, $5\times10^{-8}$S/cm, $5\times10^{-9}$S/cm, $5\times10^{-10}$S/cm, $5\times10^{-11}$S/cm, $5\times10^{-12}$S/cm, $5\times10^{-13}$S/cm, $5\times10^{-14}$S/cm, $5\times10^{-15}$S/cm, $5\times10^{-16}$S/cm, etc. or may be in a range consisting of any of the above values. The lower the electrical conductivity of the heat-conducting particles, the better the insulating properties, the less likely it is to increase the electronic conductivity of the electrolyte when the heat-conducting particles are introduced into the electrolyte, and the lower the probability of battery self-discharge. With the increase in the electrical conductivity of the heat-conducting particles, the cost and/or difficulty in material selection of the heat-conducting particles increases accordingly.

The electrical conductivity of the heat-conducting particles is controlled within the given range, which is not only conducive to reducing the probability of battery self-discharge due to the introduction of the heat-conducting particles but also conducive to reducing the cost and/or the difficulty in material selection of the heat-conducting particles.

In some embodiments of the present application, the heat-conducting particles include diamond-like carbon.

Carbon in diamond is bonded in the form of $sp^3$ bonds, and carbon in graphite is bonded in the form of $sp^2$ bonds, whereas the diamond-like carbon is amorphous carbon, having the main component of carbon, including two types of hybridization bonds of $sp^3$ and $sp^2$, and classified into hydrogenated diamond-like carbon and non-hydrogenated diamond-like carbon. The hydrogenated diamond-like carbon further contains a carbon-hydrogen group. The diamond-like carbon has good heat conduction and electrical insulation, and the introduction of the diamond-like carbon as the heat-conducting particles into the electrolyte is conducive to improving the temperature uniformity of the electrolyte, improving the curing uniformity of the gel polymer matrix during the in-situ polymerization reaction, and improving the uniformity of impedance and elasticity modulus of the gel polymer electrolyte matrix as well as kinetic performance of the battery, and is less prone to increasing the probability of battery self-discharge. Characteristic peaks of carbon in different types of carbon materials are different. In practical operations, the battery can be disassembled to collect solid heat-conducting particles in the gel polymer electrolyte, and the solid particle samples obtained are subjected to an XRD analysis to determine the presence of the diamond-like carbon based on the characteristic peaks of carbon in an XRD spectrum. For example, solid particle samples are loaded on a sample stage for XRD, and are tested by an XRD device using a Cu target as an X-ray source. When the samples exhibit diffraction peaks in the range of 2θ=43°-45°, 74°-76°, it indicates that the solid particle samples have characteristic diffraction peaks of the diamond-like carbon, and accordingly the electrolyte of the gel polymer electrolyte contains the diamond-like carbon material. It can be understood that the heat-conducting particles may include only the diamond-like carbon, or may include both the diamond-like carbon and other heat-conducting material particles that satisfy requirements for the heat conductivity coefficient and electrical conductivity of heat-conducting particles; furthermore, the diamond-like carbon in the heat-conducting particles may include the hydrogenated diamond-like carbon and/or the non-hydrogenated diamond-like carbon, and the hydrogenated diamond-like carbon and the non-hydrogenated diamond-like carbon may independently include one or more different types of diamond-like carbon. Optionally, the heat-conducting particles may include diamond-like carbon only.

The heat-conducting particles including diamond-like carbon is used such that the heat-conducting particles have a high heat conductivity coefficient and a low conductivity, which is conducive to improving the curing uniformity of the polymer matrix in the in-situ polymerization reaction, is less prone to increasing the probability of battery self-discharge, and is conducive to improving kinetic performance of the battery.

In some embodiments of the present application, based on the total number of atoms of the diamond-like carbon, an atomic percent of hydrogen in the diamond-like carbon may be less than or equal to 50 at%, optionally less than or equal to 20 at%, and optionally less than or equal to 10 at%.

For example, the atomic percent of hydrogen in the diamond-like carbon may be 50 at%, 45 at%, 40 at%, 35 at%, 30 at%, 25 at%, 20 at%, 15 at%, 10 at%, 5 at%, 3 at%, etc., or may be in a range consisting of any of the above values. The total number of atoms of the diamond-like carbon can be understood as the sum of moles of all elements contained in the diamond-like carbon. For example, assuming that only hydrogen and carbon elements are contained in the diamond-like carbon, and that the total number of moles of the hydrogen elements is $n_1$, and the total number of moles of the carbon element is $n_2$, then the total number of atoms of the diamond-like carbon is $n_1+n_2$, and the atomic percent of hydrogen in the diamond-like carbon is $n_1/(n_1+n_2)\times100\%$. In practical operations, solid particles in the electrolyte of the gel polymer electrolyte may be collected and subjected to the XRD analysis. If the solid particle samples have only the characteristic peaks of the diamond-like carbon, it means that the solid particles are a diamond-like carbon material, and at this time, the solid particle samples may be sent to an elemental analyzer, and completely combusted and decomposed in an environment with a small amount of pure oxygen; and then $CO_2$ and $H_2O$ produced by combustion are quantitatively analyzed to determine the hydrogen content of the diamond-like carbon. The lower the hydrogen content in the diamond-like carbon, the closer its performance is to that of diamond, and the better its heat conduction and electrical insulation. Accordingly, the use of the diamond-like carbon as heat-conducting particles in the electrolyte is further conducive to improving the curing uniformity of the polymer matrix during the in-situ polymerization reaction, and is less prone to increasing the probability of battery self-discharge. It should be noted that the diamond-like carbon may either include only hydrogenated diamond-like carbon or both hydrogenated diamond-like carbon and non-hydrogenated diamond-like carbon, as long as their hydrogen content meets the requirements of the given range. To further improve the heat conduction and electrical insulation of the heat-conducting particles, the hydrogen content of the diamond-like carbon is optionally less than or equal to 20 at%, or less than or equal to 10 at%.

The hydrogen content in the diamond-like carbon is controlled within the given range, which is conducive to improving the curinguniformity of the polymer matrix during the in-situ polymerization reaction,is less prone to increasing the probability of battery self-discharge, and isconducive toimproving kinetic performance of the battery.

In some embodiments of the present application, based on the total number of atoms of carbon in the diamond-like carbon, an atomic percent of $sp^3$-bonded carbon in the diamond-like carbon is 20 at% to 85 at%, and optionally 70 at% to 85 at%.

For example, the atomic percent of the $sp^3$-bonded carbon in the diamond-like carbon may be 20 at%, 25 at%, 30 at%, 35 at%, 40 at%, 45 at%, 50 at%, 55 at%, 60 at%, 65 at%, 70 at%, 75 at%, 80 at%, 85 at%, etc., or may be in a range consisting of any of the above values. Here, the total number of atoms of carbon in the diamond-like carbon can be understood as the total number of moles of carbon elements in the diamond-like carbon. In practical operations, solid particles in the electrolyte of the gel polymer electrolyte may be collected and subjected to the XRD analysis. When the solid particle samples have only characteristic peaks of the diamond-like carbon, it means that the solid particles are a diamond-like carbon material, and at this time, the solid particle samples can be loaded and subjected to an XPS analysis. Through the XPS analysis on carbon elements, different characteristic peaks contributed by different bond energies of $sp^2$ and $sp^3$ hybridization of carbon atoms are measured to be 284.4 eV and 285.2 eV, respectively. By splitting XPS test peaks, the proportion of content of $sp^3$-bonded carbon can be determined according to the corresponding area ratio of the 284.4 eV and 285.2 eV characteristic peaks. The higher the content of $sp^3$-bonded carbon in the diamond-like carbon, the closer its performance is to that of diamond, and the better its heat conduction and electrical insulation. Accordingly, the use of the diamond-like carbon as the heat-conducting particles in the electrolyte is further conducive to improving the curing uniformity of the polymer matrix during the in-situ polymerization reaction, and is less prone to increasing the probability of battery self-discharge. However, with the increase of the $sp^3$-bonded carbon content, the preparation difficulty and cost will also increase accordingly. It should be noted that the diamond-like carbon may either include only hydrogenated diamond-like carbon or both hydrogenated diamond-like carbon and non-hydrogenated diamond-like carbon, as long as the $p^3$-bonded carbon content meets the requirements of the given range. In order to further improve the heat conduction and electrical insulation of the heat-conducting particles, the atomic percent of the $sp^3$-bonded carbon of the diamond-like carbon may be 70 at% to 85 at%.

The content of $sp^3$-bonded carbon in the diamond-like carbon is controlled within the given range, which is conducive to improving the curing uniformity of the polymer matrix during the in-situ polymerization reaction, is less prone to increasing the probability of battery self-discharge, is conducive to improving kinetic performance of the battery, and balancing the preparation difficulty and cost of the diamond-like carbon.

In some embodiments of the present application, the heat-conducting particles may have a particle size less than or equal to 10 $\mu$m.

For example, the particle size of the heat-conducting particles may be less than or equal to 10 $\mu$m, less than or equal to 8 $\mu$m, less than or equal to 6 $\mu$m, less than or equal to 4 $\mu$m, less than or equal to 2 $\mu$m, less than or equal to 1 $\mu$m, less than or equal to 500 nm, less than or equal to 100 nm, less than or equal to 50 nm, etc., or may be in a range consisting of any of the above values. The particle size of the heat-conducting particles may be determined using a laser particle size analyzer (e.g. Malvern Master Size 3000) with reference to the standard GB/T 19077.1-2016. The particle size of the heat-conducting particles may affect their dispersion uniformity in the electrolyte as well as a transport path of active ions (e.g., lithium ions), which affects the electrochemical performance of the battery. Optionally, the particle size of the heat-conducting particles may be 50 nm to 10 $\mu$m; further optionally, the heat-conducting particles may include primary particles with a particle size of 5 nm to1 $\mu$m and secondary particles with a particle size of 50 nm to 10 $\mu$m. The secondary particles

may be formed by agglomeration of the primary particles.The heat-conducting particles with a smaller particle size may have the phenomenon of agglomeration in the electrolyte. By controlling the particle sizes of the primary particles and the secondary particles to meet the given range, it is conducive to improving the dispersion uniformity of the heat-conducting particles in the electrolyte and obtaining a good active ion transmission effect.

The particle size of the heat-conducting particles is controlled within the given range, which is not only conducive to improving the temperature uniformity of the electrolyte and the curing uniformity of the gel polymer matrix but also conducive to providing the battery a good electrochemical performance.

In some embodiments of the present application, based on the total mass of the gel polymer electrolyte, a weight percent of the heat-conducting particles may be 0.1 wt% to 5 wt%, and optionally 0.5 wt% to 2 wt%.

For example, based on the total mass of the gel polymer electrolyte, the weight percent of the heat-conducting particles may be 0.1 wt%, 0.5 wt%, 0.8 wt%, 1 wt%, 1.2 wt%, 1.5 wt%, 1.8 wt%, 2 wt%, 2.5 wt%, 3 wt%, 3.5 wt%, 4 wt%, 4.5 wt%, 5 wt%, etc., or may be in a range consisting of any of the above values. Optionally, the heat-conducting particles in the electrolyte may be diamond-like carbon, and the content of the diamond-like carbon in the gel polymer electrolyte may be determined by a TG-MS analysis (Thermogravimetry-Mass Spectrum Analysis). The diamond-like carbon has an extremely high thermal stability temperature, and has no local overheating due to its good thermal conductivity. The TG-MS assay may include: separating the electrolyte from the gel polymer electrolyte from the gel polymer matrix, filtering and washing to obtain a solid sample; and heating the solid sample to 500 degrees Celsius by 20 degrees minute in an oxygen environment so that any residual components of the polymer electrolyte matrix that may be present are completely removed, leaving only the diamond-like carbon component. The weight percent of the heat-conducting particles of the diamond-like carbon can be obtained according to the mass of other components measured by TG-MS and the total mass of the gel polymer electrolyte sample. The increase of the mass concentration of the heat-conducting particles in the gel polymer electrolyte is conducive to improving the temperature uniformity of the electrolyte, but the transport path of active ions (e.g., lithium ions) may be affected to a certain extent as the concentration of the heat-conducting particles in the electrolyte increases too much.

The mass concentration of the heat-conducting particles in the gel polymer electrolyte is controlled within the given range, which is not only conducive to enhancing the improvement effect of the heat-conducting particles on the curing uniformity of the gel polymer matrix but also conducive to obtaining a good active ion transport effect.

In some embodiments of the present application, the gel polymer electrolyte further includes a gel polymer matrix, where the heat-conducting particles may be dispersed on the gel polymer matrix.

The gel polymer electrolyte includes a gel polymer matrix and an electrolyte, the gel polymer matrix is a three-dimensional mesh structure formed by cross-linking and curing, and the electrolyte fills pores of the three-dimensional mesh structure. Part of the heat-conducting particles may be attached to the gel polymer matrix in the in-situ curing process of the gel polymer matrix or charging and discharging cycles of the battery. The heat-conducting particles may include diamond-like carbon, and one or more of conventional methods such as TG-MS analysis, thermogravimetric analysis, and XRD analysis may be combined to determine whether the diamond-like carbon is dispersed on the gel polymer matrix.

The property that the heat-conducting particles may be dispersed on the gel polymer matrix may be utilized to further determine whether there are heat-conducting particles in the gel polymer electrolyte.

It can be understood that the electrolyte of the gel polymer electrolyte may include a solvent and an active metal salt (e.g., for a lithium battery, the active metal salt may be a lithium salt); the solvent may be a non-aqueous solvent, and optionally, the solvent may include a primary solvent and a secondary solvent, where the primary solvent may function to dissolve the lithium salt and improve the electrochemical stability of the electrolyte, and the secondary solvent may function to reduce electrolyte viscosity, further improve the ionic conductivity, and the like. The types of the primary solvent, the secondary solvent and the lithium salt are not particularly limited, and those skilled in the art may flexibly select them according to practical needs.

In some embodiments of the present application, the primary solvent in the electrolyte may include, but is not limited to, at least one of an ester solvent, an ether solvent, a sulfone solvent, a nitrile solvent, and solvents such as ionic liquids.. The ester solvent may include, but is not limited to, at least one of ethylene carbonate (EC), propylene carbonate (PC), butylene carbonate (BC), vinylene carbonate (VC), ethylene sulfite (ES), propylene sulfite (PS), dimethyl sulfite (DMS), diethyl sulfite (DES), γ-butyrolactone (BL), dimethyl carbonate (DMC), diethyl carbonate ( DEC), ethyl methyl carbonate (EMC), methyl propyl carbonate (MPC), methyl formate (MF), ethyl formate (EF), methyl acetate (MA), ethyl acetate (EA), ethyl propionate (EP), ethyl butyrate (EB), etc., and their fluorinated derivatives. The ether solvent may include, but is not limited to, at least one of dimethoxymethane (DMM), ethylene glycol dimethyl ether (DME), ethylene glycol diethyl ether (DEE), 1,2-dimethoxypropane (DMP), diethylene glycol dimethyl ether (DGM), tetrahydrofuran (THF), tetrahydropyran (THP), 1,3-dioxolane (DOL), 1,3-dioxane (1,3-DXA), 1, 4-dioxane (1,4-DXA), etc., and their fluorinated derivatives. The sulfone solvent includes, but is not limited to, at least one of dimethyl sulfone, dimethyl sulfoxide, cyclobutyl sulfone, ethyl methyl sulfone, tetramethylene sulfoxide, ethyl methyl sulfoxide, diethyl sulfone, diethyl sulfoxide, methyl phenyl sulfone, methyl phenyl sulfoxide, ethyl phenyl sulfone, ethyl phenyl sulfoxide, vinyl phenyl sulfone, vinyl phenyl sulfoxide, etc., and their fluorinated derivatives. The use of the primary solvent within the above given range is conducive to promoting the dissolution of the active metal salt, so that the electrolyte has a good ion transport performance.

In some embodiments of the present application, the secondary solvent in the electrolyte may be a solvent that does not dissolve the active metal salt but is capable of being well mixed with the primary solvent. Generally, an electrolyte containing lower-concentration active metal salts has a lower viscosity and a higher conductivity, but a slightly poorer electrochemical stability; and a high-concentration electrolyte has a higher electrochemical stability due to the fact that most of the solvent molecules may be combined with the active metal ions (e.g., Li$^+$) to form a solvated shell structure. But the high viscosity and low ion mobility due to the high concentration may lead to degradation in the electrical properties of the electrolyte. The secondary solvent that does not dissolve the active metal salt but can be mixed well with the primary solvent is regarded as a diluent. The diluent is added to the high-concentration electrolyte to form a local-high-concentration electrolyte, so that the characteristics of the high-concentration electrolyte can be retained, and the advantages of the low-concentration electrolyte with a low viscosity and a high ionic conductivity can also be obtained, which means that the advantages of the low-concentration electrolyte and the high-concentration electrolyte can be combined in the electrolyte and the electrolyte has both high ion migration rate and good electrochemical stability, thereby further improving the kinetic performance of the battery.

In some embodiments of the present application, the secondary solvent in the electrolyte may include, but is not limited to, at least one of vinyl fluorocarbonate, cyclohexane, benzene, toluene, p-xylene, m-xylene, o-xylene, fluoro-benzene, p-difluorobenzene, m-difluorobenzene, o-difluorobenzene, trifluorotoluene, trifluoromethoxybenzene, decafluoropentane, perfluorovalerophenone, 1,1,2,2-tetrafluoroethyl-2,2,3,3-tetrafluoropropyl ether, 1,2-bis(1,1,2,2-tetrafluoroethoxy)ethane, bis(2,2,2-trifluoroethyl) ether, 1,1,2,3,3,3-hexafluoropropylethyl ether, 1H, 1H, 5H-octafluoropentyl-1, 1, 2, 2-tetrafluoroethyl ether, ethyl trifluoromethyl ether, difluoro methyl-2,2,3,3,3-pentafluoropropyl ether, heptafluoropropyl-1,2,2,2-tetrafluoroethyl ether, difluoromethyl 2,2,3,3-tetrafluoropropyl ether, perfluoroisopropyl methyl ether, 1,1,2,2-tetrafluoroethyl -2,2,2-trifluoroethyl ether, ethyl-1,1,2,2-tetrafluoroethyl ether, ethyl-2,2,2-tetrafluoroethyl ether, bis(1,1,2,2-tetrafluoroethyl) ether, etc. Optionally, the secondary solvent in the electrolyte may include at least one of trifluoromethoxybenzene, 1,1,2,2-tetrafluoroethyl-2,2,3,3-tetrafluoropropyl ether, 1,2-bis(1,1,2,2-tetrafluoroethoxy) ethane, and the secondary solvent within the given range has high electrochemical window, good compatibility, and good ability to promote the generation of fluorine-enriched SEI. The combination of the secondary solvent and the primary solvent improves the ionic conductivity and electrochemical stability of the electrolyte, and also helps to reduce side reactions between the electrolyte and the negative electrode plate.

In some embodiments of the present application, the type of the active metal salt may be selected based on the type of the battery to which the gel polymer electrolyte is applicable. In the case of the lithium battery, for example, the active metal salt may be a lithium salt. The lithium salt in the electrolyte may include, but is not limited to, one or more of lithium bis(fluorosulfonyl)imide (LiFSI), lithium hexafluorophosphate (LiPF$_6$), lithium tetrafluoroborate (LiBF$_4$), lithium hexafluor-oarsenate (LiAsF$_6$), lithium bis(trifluoromethanesulphonyl)imide (LiTFSI), lithium trifluoromethanesulfonate (LiOTF), lithium difluorophosphate (LiDFP), lithium bis(oxalate)borate (LiBOB), Lithium difluoro(oxalato)borate (LiDFOB), lithium difluoro(bisoxalato) phosphate and lithium tetrafluoro(oxalato)phosphate, for example, lithium bis(fluorosulfonyl)imide optionally. The lithium salt mentioned above can be decomposed on the surface of the positive electrode of the battery to form an SEI component rich in inorganic fluorine, and the lithium salt has a good dissociation capacity, which is conducive to achieving a high ion conductivity and a low viscosity of the electrolyte, thus improving the electrochemical performance of the battery.

In some embodiments of the present application, the polymerized monomer and/or prepolymer of the gel polymer matrix, the initiator, the active metal salt, and the heat-conducting particles may be dispersed in the electrolyte together, and the electrolyte is injected into a case holding the electrode assembly and then subjected to a temperature-rise polymerization, so that the polymerized monomer and/or prepolymer are subjected to an in-situ polymerization reaction to form the gel polymer matrix. The initiator is used for initiating the polymerization of the polymerized monomer and/or prepolymer to form the gel polymer matrix. Optionally, additives may also be added to the electrolyte as needed to achieve the desired effect. For example, additives to inhibit the dissolution of transition metals may be added, and/or, additives to promote film-forming action may be added, etc. The additives promoting the film-forming effect may include, but are not limited to, at least one of propane sultone, ethylene sulfate, glycol sulfite, tris(trimethylsilyl) phosphate, tris(trimethylsilyl) phosphite, tris(trifluoroethyl) phosphate, tris(trifluoroethyl) phosphite, tris(trimethylsilyl) borate, dimethylmaleic anhydride, and 1, 4-diisocyanatobutane. The selection of additives within the given range is conducive to improving the stability of the positive and negative electrodes of the battery and prolonging the life of the battery.

A second aspect of the present application provides a battery including a gel polymer electrolyte in the first aspect of the present application. The battery of the present application has the characteristics and effects described in the gel polymer electrolyte of the first aspect of the present application. In general, the Optionally, the battery may be a secondary battery, for example, the battery may be a lithium metal secondary battery or a lithium-ion battery.

In some embodiments of the present application, the battery further includes a positive electrode plate, a negative electrode plate and a separator, and at least one of the positive electrode plate, the negative electrode plate and the separator may include heat-conducting particles.

The gel polymer electrolyte is distributed between the electrode plate and the separator. The heat-conducting particles are distributed on at least one of the positive electrode plate, the negative electrode plate, and the separator, it is conducive to improving the uniformity of the positive electrode plate, the negative electrode plate and the separator, thus improving the temperature uniformity of the electrolyte, and enhancing the improvement effect on the curing uniformity of the polymer matrix during the in-situ polymerization reaction Optionally, the heat-conducting particles may include diamond-like carbon. Whether the positive electrode plate, the negative electrode plate or the separator contains diamond-like carbon can be determined by the XRD analysis. For example, the battery may be disassembled first to obtain the positive and negative electrode plates or the separator, and in the case of the positive electrode plate or the negative electrode plate, for example, after the electrode plate is washed, a surface material (such as an active material layer) on the electrode plate may be scraped off to obtain powder, a powder sample is subjected to the XRD analysis. Based on the characteristic peaks of an XRD analysis spectrum, it is determined whether there are heat-conducting particles in the electrode plate. The specific operation and determination methods may be referred to the description in the previous section. It should be noted that silicon and other commonly used carbon-containing negative electrode active materials do not have diffraction peaks at corresponding positions of the diamond-like carbon.

The heat-conducting particles are distributed on at least one of the positive electrode plate, the negative electrode plate and the separator, which is conducive to further improving the temperature uniformity of the electrolyte and the curing uniformity of the polymer matrix during the in-situ polymerization reaction.

In some embodiments of the present application, the positive electrode plate includes a positive electrode current collector and a positive electrode active material layer arranged on the positive electrode current collector, and the positive electrode active material layer may include the heat-conducting particles.

For example, the heat-conducting particles may be dispersed in the positive electrode active material layer, optionally the heat-conducting particles may be dispersed in an active slurry for the positive electrode active material layer; the active slurry may be applied on at least one layer of a positive electrode current collector to obtain the positive electrode active material layer containing the heat-conducting particles. In the battery, the positive electrode active material layer may be in direct contact with the electrolyte, and accordingly, the heat-conducting particles being provided in the positive electrode active material layer is conducive to, on the one hand, further improving the temperature uniformity of the electrolyte, thus enhancing the improvement effect on the curing uniformity of the polymer matrix during the in-situ polymerization reaction; and, on the other hand, improving the heat dissipation effect of the battery during use of the battery and reducing the probability of heat concentration inside the battery.

The heat-conducting particles are provided in the positive electrode active material layer, which is not only conducive to further improving the curing uniformity of the polymer matrix during the in-situ polymerization reaction but also conducive to improving the heat dissipation effect and temperature uniformity of the battery during use.

In some embodiments of the present application, the positive electrode current collector may be a conventional metal foil or a composite current collector (a metal material may be provided on a high molecular substrate to form the composite current collector). As an example, the positive electrode current collector may be an aluminum foil. The positive electrode active material layer includes a positive electrode active material, where the specific type of the positive electrode active material is not limited, and an active material that can be used for the positive electrode of the battery as known in the art may be used and can be selected by those skilled in the art according to actual requirements. For example, for the lithium battery, the positive electrode active material may include, but is not limited to, lithium transition metal oxides and/or olivine-structural lithium-containing phosphates. The lithium transition metal oxides may include undoped and/or optionally doped modified lithium transition metal oxides, uncoated and/or coated modified lithium transition metal oxides; and the olivine-structural lithium-containing phosphates may include undoped and/or optionally doped olivine-structural lithium-containing phosphates, coated and/or uncoated modified olivine-structural lithium-containing phosphates. As some specific examples, the lithium transition metal oxides may include, but are not limited to, at least one of a lithium-cobalt oxide (e.g., $LiCoO_2$), a lithium-nickel oxide (e.g., $LiNiO_2$), a lithium-manganese oxide (e.g., $LiMnO_2$ and $LiMn_2O_4$), a lithium-nickel-manganese oxide, a lithium-nickel-cobalt-manganese oxide (e.g., $LiNi_{1/3}Co_{1/3}Mn_{1/3}O_2$, $LiNi_{0.5}Co_{0.2}Mn_{0.3}O_2$, $LiNi_{0.5}Co_{0.25}Mn_{0.25}O_2$, $LiNi_{0.6}Co_{0.2}Mn_{0.2}O_2$, $LiNi_{0.8}Co_{0.1}Mn_{0.1}O_2$, and $LiNi_{0.96}Co_{0.02}Mn_{0.02}O_2$), a lithium-nickel-cobalt-aluminum oxide (e.g., $LiNi_{0.85}Co_{0.15}Al_{0.05}O_2$),and modified compounds thereof, etc. As some specific examples, the olivine-structural lithium-containing phosphates may include, but are not limited to, at least one of lithium iron phosphate (e.g., $LiFePO_4$), composites of lithium iron phosphate and carbon, lithium manganese phosphate (e.g., $LiMnPO_4$), composites of lithium manganese phosphate and carbon, lithium iron manganese phosphate, and composites of lithium iron manganese phosphate and carbon. The positive electrode active material within the given range may be obtained by preparation or obtained commercially.

In some specific embodiments of the present application, the positive electrode active material layer may further optionally include a binder, a conductive agent, and other optional additives. As an example, the conductive agent may include, but is not limited to, one or more of superconducting carbon, acetylene black, carbon black, Ketjen black, carbon dot, carbon nanotube, Super P (SP), graphene, and carbon nanofiber. As an example, the binder may include, but is not limited to, one or more of styrene butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

In some embodiments of the present application, the heat-conducting particles may have a weight percent of 0.1 wt% to 2 wt% in the positive electrode active material layer.

For example, the weight percent of the heat-conducting particles in the positive electrode active electrode material layer may be 0.1 wt%, 0.3 wt%, 0.5 wt%, 0.7 wt%, 0.9 wt%, 1.1 wt%, 1.3 wt%, 1.5 wt%, 1.7 wt%, 1.9 wt%, 2 wt%, etc., or may be in a range consisting of any of the above values. During testing of the content of the heat-conducting particles in the positive electrode active material layer, the battery may first be disassembled to obtain the positive electrode plate, the positive electrode active material layer on the positive electrode plate may be scraped off and weighed after the positive electrode plate is washed; excess hydrochloric acid solution is added to completely dissolve the positive electrode active material in the positive electrode active material layer, leaving the binder, the heat-conducting particles and the conductive agent; the remaining materials is washed with N-methylpyrrolidone (NMP) until the binder is completely removed, and then dried to obtain a powder mixture of the conductive agent and the heat-conducting particles; components of the powder mixture are determined by conventional methods such as the XRD analysis, and based on the difference in the decomposition temperatures of the heat-conducting particles and the conductive agent, the content of the heat-conducting particles is determined through the TG-MS analysis, to obtain the content of the heat-conducting particles in the positive electrode active material layer. For example, assuming that the heat-conducting particles and the conductive agent in the powder mixture are diamond-like carbon and carbon black, respectively, the powder mixture can be loaded into the TG-MS for thermogravimetric analysis, heated to 550 degrees at a rate of 20 degrees/minute in an oxygen environment, and held for 30 minutes, to decompose carbon black completely, the weight percent of the conductive agent is determined, the temperature is increased to 800 degrees or more to measure the mass of the diamond-like carbon, so as to determine the weight percent of the diamond-like carbon in the positive electrode active material layer. The increase of the weight percent of the heat-conducting particles in the positive electrode active material layer is conducive to further improving the curing uniformity of the gel polymer matrix and the heat dissipation effect of the battery. But as the content of the heat-conducting particles in the positive electrode active material layer increases, the relative content of the positive electrode active material in the positive electrode plate will decrease, and the electrical conductivity of the positive electrode active material layer will also decrease.

The weight percent of the heat-conducting particles in the positive electrode active material layer is controlled within the given range, which is not only conducive to further improving the curing uniformity of the gel polymer matrix and the heat dissipation effect of the battery but also conducive to balancing electrical conductivity of the positive electrode plate and energy density of the battery.

In some embodiments of the present application, the negative electrode plate may include a negative electrode current collector and a negative electrode active material layer arranged on the negative electrode current collector, the negative electrode active material layer may include the heat-conducting particles; or, the negative electrode plate includes a negative electrode current collector and a heat-conducting layer arranged on the negative electrode current collector, and the heat-conducting layer may include the heat-conducting particles.

In the battery, the negative electrode plate usually includes a current collector and a negative electrode active material layer, and when the negative electrode plate includes the negative electrode active material layer, the negative electrode active material layer includes a negative electrode active material, and the negative electrode current collector may be a conventional metal foil or a composite collector (e.g., the metal material may be provided on a polymer substrate to form the composite collector), and, as an example, the negative electrode current collector may be a copper foil. At this point, the heat-conducting particles may be dispersed in the negative electrode active material layer.

In addition, the negative electrode plate may not contain the negative electrode active material layer, in which case the negative electrode current collector may be a metal current collector. The metal current collector includes, but is not limited to, metal monomers, for example, for the lithium battery, the material of the negative electrode current collector may be lithium metal, or it may be an alloy formed from lithium metal and various other metallic or non-metallic elements, and optionally, the metallic elements may include, but are not limited to tin (Sn), zinc (Zn), aluminum (Al), magnesium (Mg), silver (Ag), gold (Au), gallium (Ga), indium (In), foil (Pt), etc.; further optionally, the non-metallic elements may include, but are not limited to, boron (B), carbon (C), silicon (Si), etc. As an example, the negative electrode current collector may be a lithium foil. When the negative electrode plate does not contain a negative electrode active material layer, only lithium in the positive electrode is used in the cycling process, and is precipitated and stripped in the form of lithium metal on a negative electrode side, at which time the heat-conducting layer may be provided on the surface of the negative electrode current collector, so that the heat-conducting layer contains the heat-conducting particles. It can be understood that the heat-conducting layer may contain only heat-conducting particles, or other components, and the other components may include, but are not limited to, a binder and the like.

In the battery, the negative electrode active material layer may also be in direct contact with the electrolyte, and accordingly, the heat-conducting particles being dispersed in the negative electrode active material layer or the heat-conducting layer containing heat-conducting particles being provided on the surface of the negative electrode plate is conducive to, on the one hand, further improving the temperature uniformity of the electrolyte, thus enhancing the improvement effect on the curing uniformity of the polymer matrix during the in-situ polymerization reaction; and, on the other hand, improving the heat dissipation effect of the battery during use of the battery and reducing the probability of heat concentration inside the battery.

The heat-conducting particles are provided in the negative electrode active material layer or the heat-conducting layer containing the heat-conducting particles is provided on the surface of the negative electrode current collector, which is not only conducive to further improving the curing uniformity of the polymer matrix during the in-situ polymerization reaction but also conducive to improving the heat dissipation effect and temperature uniformity of the battery during use.

In some embodiments of the present application, the negative electrode active material may include a silicon material, such as a composite negative electrode active material doped with a silicon-based material and a carbon material, and the use of the silicon material in the negative electrode active material layer is conducive to further improving the energy density of the battery.

In some embodiments of the present application, the negative electrode active material layer may further optionally include a binder, a conductive agent, and other optional additives. As an example, the conductive agent may include, but is not limited to, one or more of superconducting carbon, acetylene black, carbon black, Ketjen black, carbon dot, carbon nanotube, graphene, and carbon nanofiber. As an example, the binder may include, but is not limited to, one or more of polymerized styrene butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB). As an example, the other additives may include, but are not limited to, a thickener, and a dispersant (e.g., sodium carboxymethyl cellulose CMC-Na), and a PTC thermistor material.

In some embodiments of the present application, the weight percent of the heat-conducting particles in the negative electrode active material layer may be 0.1 wt% to 4 wt%.

For example, the weight percent of the heat-conducting particles in the negative electrode active material layer may be 0.1 wt%, 0.5 wt%, 1 wt%, 1.5 wt%, 2 wt%, 2.5 wt%, 3 wt%, 3.5 wt%, 4 wt%, etc., or may be in a range consisting of any of the above values. The increase of the weight percent of the heat-conducting particles in the negative electrode active material layer is conducive to further improving the curing uniformity of the gel polymer matrix and the heat dissipation effect of the battery. But as the content of the heat-conducting particles in the negative electrode active material layer increases, the relative content of the negative electrode active material in the negative electrode plate will decrease, and the electrical conductivity of the negative electrode active material layer will also decrease.

The weight percent of the heat-conducting particles in the negative electrode active material layer is controlled within the given range, which is conducive to further improving the curing uniformity of the gel polymer matrix and the heat dissipation effect of the battery but also conducive to balancing electrical conductivity of the negative electrode plate and energy density of the battery.

In some embodiments of the present application, the negative electrode active material layer may further include a silicon material, and the weight percent of a silicon element in the negative electrode active material layer may be greater than or equal to 10 wt%.

For example, the weight percent of the silicon element in the negative electrode active material layer may be greater than or equal to 10 wt%, greater than or equal to 15 wt%, greater than or equal to 20 wt%, greater than or equal to 25 wt%, greater than or equal to 30 wt%, greater than or equal to 35 wt%, etc, or may be in a range consisting of any of the above values. Silicon has a high theoretical specific capacity and a low lithiation potential, and the use of the silicon material as the negative electrode active material is conducive to further improving the energy density of the negative electrode plate and the battery. Optionally, the silicon material and the carbon material may be compounded as the negative electrode active material. Further optionally, the negative electrode active material layer may include both a silicon material and heat-conducting particles. Due to the fact that the heat conduction of the silicon material is relatively poor, the use of the silicon material and the heat-conducting particles together in the negative electrode active material layer is conducive to improving the charge/discharge specific capacity of the negative electrode plate and the heat conduction uniformity.

The weight percent of the silicon element in the negative electrode active material layer is controlled to meet the given range, which is conducive to improving the energy density of the negative electrode plate and the battery.

In some embodiments of the present application, the thickness of the thermal conductivity layer may be 50 nm to 5 $\mu$m.

When the heat-conducting layer is provided on the negative electrode current collector, the thickness of the heat-conducting layer may be 50 nm, 60 nm, 70 nm, 80 nm, 100 nm, 200 nm, 500 nm, 800 nm, 1 $\mu$m, 2 $\mu$m, 3 $\mu$m, 4 $\mu$m, 5 $\mu$m, etc, or may be in a range consisting of any of the above values. During testing of the thickness of the heat-conducting layer, a cross section of the negative electrode plate can be prepared by means of cryogenic-ion beam cross section polishing (Cryo-CP) and obtained by observation through an SEM. The average particle size of the heat-conducting particles in the heat-conducting layer is low relative to that of the active material of the negative electrode layer, and accordingly spatial distribution of the heat-conducting layer can be resolved and thickness measurement can be carried out in the SEM.

Optionally, the heat-conducting layer may be formed on the surface of the negative electrode current collector by a vapor deposition method, and the heat-conducting layer may have a pore structure by vapor deposition adjustment. The heat-conducting layer having the pore structure is conducive to improving the uniform deposition of active ions of the battery on the surface of the negative electrode plate and the effective contact between the negative electrode plate and the electrolyte. The increase of the thickness of the heat-conducting layer is conducive to further improving the curing uniformity of the gel polymer matrix and the heat dissipation effect of the battery, but as the thickness of the heat-conducting layer increases, the energy density of the battery decreases, and in addition, the electrical conductivity of the negative electrode plate may also decrease.

The thickness of the heat-conducting layer is controlled within the given range, which is not only conducive to further improving the curing uniformity of the gel polymer matrix and the heat dissipation effect of the battery but also conducive to balancing the electrical conductivity of the negative electrode plate and the energy density of the battery.

In some embodiments of the present application, the weight percent of the heat-conducting particles in the heat-conducting layer may be greater than or equal to 50 wt%.

When the heat-conducting layer is provided on the negative electrode current collector, the weight percent of the heat-conducting particles in the heat-conducting layer may be greater than or equal to 50 wt%, greater than or equal to 55 wt%, greater than or equal to 60 wt%, greater than or equal to 65 wt%, greater than or equal to 70 wt%, greater than or equal to 75 wt%, etc., or may be in a range consisting of any of the above values. During testing of the weight percent of the heat-conducting particles in the heat-conducting layer, the heat-conducting layer may be scraped off and other components in the heat-conducting layer may be removed by conventional methods such as a solvent method and/or an ultrasonic method, and accordingly the weight percent of the heat-conducting particles is obtained by comparing the weight change of the test samples before and after the removal of the other components. The increase of the weight percent of the heat-conducting particles in the heat-conducting layer is conducive to further improving the curing uniformity of the gel polymer matrix and the heat dissipation effect of the battery, but the electrical conductivity of the heat-conducting layer and the negative electrode plate may be decreased.

The content of the heat-conducting particles in the heat-conducting layer is controlled within the given range, which is not only conducive to further improving the curing uniformity of the gel polymer matrix and the heat dissipation effect of the battery but also conducive to taking into account the electrical conductivity of the negative electrode plate.

In some embodiments of the present application, the heat-conducting layer further includes a conductive agent and/or a binder, the weight percent of the conductive agent in the heat-conducting layer may be 0.1 wt% to 40 wt%, optionally 5 wt% to 15 wt%, and the weight percent of the binder in the heat-conducting layer may be 0.01 wt% to 5 wt%.

For example, the weight percent of the conductive agent in the heat-conducting layer may be 0.1 wt%, 1 wt%, 5 wt%, 10 wt%, 15 wt%, 20 wt%, 25 wt%, 30 wt%, 35 wt%, 40 wt%, etc., or may be in a range consisting of any of the above values. The weight percent of the binder in the heat-conducting layer may be 0.01 wt%, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, etc., or may be in a range consisting of any of the above values. During testing of the content of the binder in the heat-conducting layer, the heat-conducting layer may be scraped off and ground into powder, after the powder is weighed, the powder is washed with N-methylpyrrolidone and deionized water respectively until the binder is fully dissolved, after that, the powder is fully dried and weighed, and a difference between the two weights is the weight percent of the binder in the heat-conducting layer. When the heat-conducting layer further includes the conductive agent, the separation of the heat-conducting particles and the conductive agent can also be realized by conventional methods such as the ultrasonic method. For example, in the case of conductive carbon black serving as the conductive agent and the heat-conducting particles being diamond-like carbon, based on the characteristic that the density of the diamond-like carbon is greater than $3g/cm^3$ and the density of the conductive carbon black is lower than $3g/cm^3$, a power mixture of the conductive agent and the heat-conducting particles is subjected to ultrasonic treatment in a solvent with a density of $3g/cm^3$; after the ultrasonic treatment, particles will be dispersed and layered in the solvent, and the part of the conductive agent in the upper layer is taken, dried and weighed to determine the weight percent of the conductive agent in the heat-conducting layer. Optionally, the weight percent of the heat-conducting particles in the heat-conducting layer may be further obtained by measuring the part of the heat-conducting particles in the lower layer, followed by drying and weighing, and/or in conjunction with the weight percent of the conductive agent and/or binder.

As the heat-conducting particles have a low electrical conductivity, an appropriate amount of conductive agent may be doped into the heat-conducting layer to improve the electrical conduction of the negative electrode plate, and an appropriate amount of binder may be doped into the heat-conducting layer to improve the adhesion of the heat-conducting layer to the surface of the negative electrode current collector, but the additive amount of the two will have a certain influence on the heat conduction effect of the heat-conducting layer.

The content of the conductive agent and/or binder in the heat-conducting layer is controlled within the given range, which is not only conducive to further improving the curing uniformity of the gel polymer matrix and the heat dissipation effect of the battery but also conducive to balancing the electrical conductivity of the negative electrode plate and the adhesion of a conductive layer.

In some embodiments of the present application, the weight percent of the heat-conducting particles in the electrolyte may be greater than or equal to the weight percent of the heat-conducting particles in the negative electrode active material layer.

As some specific examples, the heat-conducting particles may be dispersed in both the electrolyte and the negative electrode active material layer. Compared to the way to disperse the heat-conducting particles in the negative electrode active material layer, the way to disperse the heat-conducting particles in the electrolyte is conducive to enhancing the improvement effect on the curing uniformity of the gel polymer matrix and the heat dissipation of the battery, without affecting the amount of the negative electrode active material in the negative electrode plate.

The weight percent of the heat-conducting particles in the electrolyte is greater than or equal to the weight percent of the heat-conducting particles in the negative electrode active material layer, which is conducive to further enhancing the improvement effect on the curing uniformity and the heat dissipation of the battery, and is also conducive to taking into account the energy density of the battery.

In some embodiments of the present application, the weight percent of the heat-conducting particles in the negative electrode active material layer may be greater than or equal to the weight percent of the heat-conducting particles in the positive electrode active material layer.

In order to improve the charge/discharge specific capacity of the negative electrode plate, the negative electrode active material may include a silicon material with a low thermal conductivity. The content of the heat-conducting particles in the negative electrode active material layer is higher than that in the positive electrode active material layer, which is conducive to improving the heat conduction uniformity of the negative electrode plate as well as the consistency of the overall heat conduction effect inside the battery, and improving the heat conduction effect of the negative electrode plate containing the silicon material as well as the curing uniformity of the gel polymer matrix.

The weight percent of the heat-conducting particles in the negative electrode active material layer is greater than or equal to the weight percent of the heat-conducting particles in the positive electrode active material layer, which is conducive to further enhancing the improvement effect on the curing uniformity and the heat dissipation of the battery.

In some embodiments of the present application, the battery may further includes a separator, and the separator may include, but is not limited to, a polyethylene porous film, a polypropylene porous film, a polyimide porous film, and a porous film formed by compositing multiple polymers.

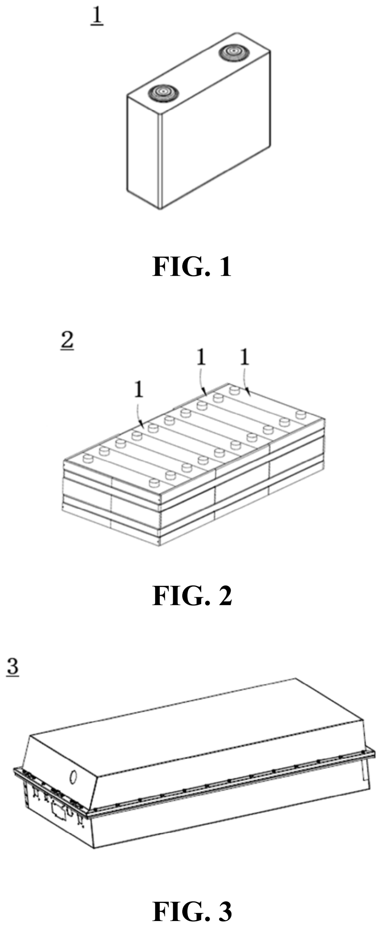

In some embodiments of the present application, the shape of the battery in the second aspect of the present application is not particularly limited, and those skilled in the art may flexibly select it according to the actual needs, for example, the battery may be cylindrical, square (understood with reference to Fig. 1), or in any other arbitrary shape.

In some embodiments of the present application, the battery may include an outer package for encapsulating the positive electrode plate, the negative electrode plate, the separator and the electrolyte.

In some embodiments, the outer package may include a case and a cover plate. The case may include a bottom plate and a side plate connected to the bottom plate, which enclose to form an accommodating cavity. The case has an opening that communicates with the accommodating cavity, and the cover plate may cover the opening to close the accommodating cavity.

In some embodiments, the positive electrode plate, the negative electrode plate, and the separator may be made into an electrode assembly by winding or lamination. The electrode assembly is encapsulated within the accommodating cavity. The electrolyte in the gel polymer electrolyte impregnates the electrode assembly. There may be one or more electrode assemblies in the battery, and the quantity may be adjusted as required.

In some embodiments, the outer package of the battery cell may be a hard shell, the hard shell may be a metal shell or a non-metal shell, such as a hard plastic shell, an aluminum shell, and a steel shell.

In some other embodiments, the outer package of the battery may also be a soft pack, such as a pouch. A material of the soft pack may include plastic, for example, may include one or more of polypropylene (PP), polybutylene terephthalate (PBT), polybutylene succinate (PBS), etc., and for further example, it may be an aluminum-plastic film, etc.

In some embodiments of the present application, the battery may be either a battery cell 1 (understood with reference to Fig. 1) or a battery module 2 (understood with reference to Fig. 2) or a battery pack 3 (understood with reference to Fig. 3) including the battery cell 1.

In some embodiments, the battery may be a battery module, one or a plurality of battery cells may be contained in the battery module, and the specific number of the battery cells can be adjusted according to the application and capacity of the battery module. Fig. 2 shows a battery module 2 as an example. With reference to Fig. 2, in the battery module 2, a plurality of battery cells 1 can be sequentially arranged in a length direction of the battery module 2. Of course, any other arrangements are also possible. The plurality of battery cells 1 may further be fixed by fasteners. Optionally, the battery module 2 may further include a case having an accommodating space, in which the plurality of battery cells 1 are accommodated.

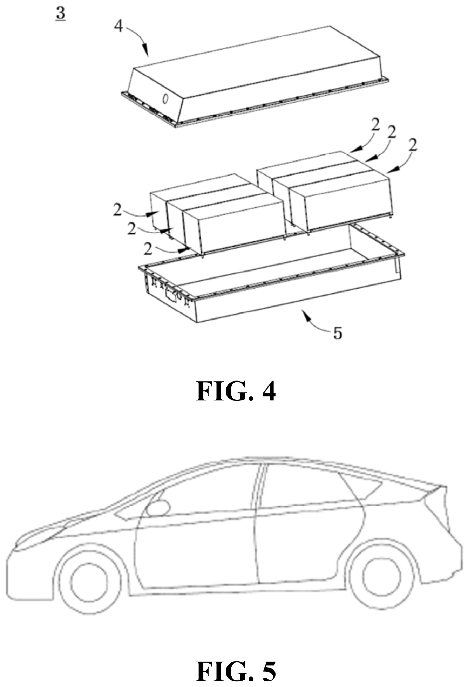

In some embodiments, the battery module may be further assembled into a battery pack, and a quantity of battery modules contained in the battery pack may be adjusted based on application and capacity of the battery pack. Referring to Fig. 3 or 4(Figs. 3 and 4 show an example of a battery pack 3), the battery pack 3 may include a battery box and a plurality of battery modules 2 arranged in the battery box. The battery box may include an upper box 4 and a lower box 5, where the upper box 4 can cover the lower box 5 and forms an enclosed space for accommodating the battery module 2. The plurality of battery modules 2 may be arranged in the battery box in any manner.

Additionally, the present application further provides an electrical apparatus, which includes a battery in the second aspect of the present application. The battery, such as a battery cell, a battery module, or a battery pack, can be used as a power source for the electrical apparatus, and can also be used as an energy storage unit for the electrical apparatus. The electrical apparatus may include, but is not limited to, a mobile device (e.g. a mobile phone, a laptop), an electric vehicle (e.g. an all-electric vehicle, a hybrid electric vehicle, a plug-in hybrid electric vehicle, an electric bicycle, an electric scooter, an electric golf cart, an electric truck), an electric train, a ship, a satellite, and an energy storage system. It is understood with reference to Fig. 5 that, as a specific example, the electric apparatus may be a vehicle. For the electrical apparatus, the specific type of the battery can be selected according to the usage requirements of the electrical apparatus, such as a battery cell, a battery module or a battery pack.

As an example, the electrical apparatus may be an all-electric vehicle, a hybrid electric vehicle, or a plug-in hybrid electric vehicle. In order to satisfy the requirements of the electrical apparatus for high power and high energy density of the battery, the battery pack or battery module can be employed.

As another example, the electrical apparatus may be a mobile phone, a tablet, a laptop. Lighting and thinning of the electrical apparatus is generally required, and thus the battery cell can be employed as the power source.

Examples of the present application will be described hereinafter. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

Examples of the present application will be described hereinafter. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

**Example 1**

(1) Preparation of positive electrode plate

A positive electrode active material $LiNi_{0.8}Co_{0.1}Mn_{0.1}O_2$, acetylene black as a conductive agent and PVDF (polyvinylidene fluoride) as a binder were mixed at a mass ratio of 96:2:2, and N-methylpyrrolidone (NMP) as a solvent was added and stirred until the system was homogeneous, to obtain a positive electrode slurry (with a solid content of 40 wt%). The positive electrode slurry was uniformly applied on both sides of a positive electrode current collector aluminum foil at capacity with a solid content of about 20 mg/cm$^2$, dried at room temperature and then transferred to an oven for further drying, and then cut into a rectangle of 40 mm×50 mm as a positive electrode plate, with a positive electrode area capacity of 4 mAh/cm$^2$.

(2) Preparation of negative electrode plate

A 20 $\mu$m lithium foil was rolled to cover a 12 $\mu$m copper foil, and then cut into a rectangle of 41 mm×51 mm as a negative electrode plate.

Alternatively, a negative electrode active material 20 wt% Si-Graphite silicon-carbon, carbon nanotubes as a conductive agent, and SBR (styrene-butadiene rubber) as a binder were mixed at a mass ratio of 96.9:0.1:3, and NMP as a solvent was added and stirred until the system was homogeneous, to obtain a negative electrode slurry (with a solid content of 30 wt%). The negative electrode slurry was uniformly applied on both sides of a negative electrode current collector copper foil at a capacity with a solid content of about 3.9 mg/cm$^2$, dried at room temperature and transferred to an oven for further drying, and then cut into a rectangle of 41 mm×51 mm as a positive electrode plate, with a negative electrode area capacity of 4.4 mAh/cm$^2$.

(3) Preparation of precursor solution of gel polymer electrolyte

115 g of primary solvent (obtained by mixing ethylene carbonate (EC) with diethyl carbonate (DEC) at a volume ratio of 1:1), 6 g of fluoroethylene carbonate (FEC) as a secondary solvent, 15 g of lithium salt $LiPF_6$, and diamond-like carbon were mixed to produce an electrolyte with a concentration of 1 M; 20 g of vinylene carbonate as a polymerized monomer, 6.67 g of poly(ethylene glycol) diacrylate as a cross-linking agent, and 0.53 g of azodiisobutyronitrile as an initiator were then added. Here, the diamond-like carbon had a heat conductivity coefficient of 1000 W/mK, an electrical conductivity of $3.9\times10^{-12}$ S/cm, and a weight percent of 2 wt% in the precursor solution of the gel polymer electrolyte.

(4) Preparation of separator

A polyethylene porous film with a thickness of 10 $\mu$m was selected as a separator, which was cut into a rectangle of 45 mm$\times$55 mm.

(5) Preparation of secondary battery

Battery assembly: 12 pieces of cut positive electrode plates and 13 pieces of cut negative electrode plates were taken to match each other, were separated by means of the above separator, and then wrapped in an aluminum-plastic film bag to form a laminated dry cell. 4.5 g of the electrolyte prepared above was injected, and was encapsulated by means of an aluminum-plastic film bag by hot pressing in vacuum. After curing at 70°C for 6h and then standing at room temperature for at least 12 hours, testing can be started. A rated capacity of the laminated cell prepared in this way was 2376 mAh.

**Examples 2-20 and Comparative Example 1**

Comparative Example 1 differs from Example 1 in that, in step (3), the diamond-like carbon was not added when the precursor solution of the gel polymer electrolyte was prepared.

Examples 2 to 7 differ from Example 1 in that the heat conductivity coefficient of the diamond-like carbon was different.

Examples 8 to 11 differ from Example 1 in that the weight percent of the diamond-like carbon in the gel polymer electrolyte was different.

Examples 12 to 14 differ from Example 1 in that the range of particle size of the diamond-like carbon was different.

Examples 15 to 19 differ from Example 2 in that the hydrogen content and sp$^3$-bonded carbon content of the diamond-like carbon were different, and the heat conductivity coefficient and the electrical conductivity were different.

Examples 20 to 24 differ from Example 2 in that the electrical conductivity and the heat conductivity coefficient of the diamond-like carbon were different, and the heat conductivity coefficient of the diamond-like carbon in each of Examples 20 to 24 was greater than 400 W/mK at 25°C.

**Performance Test:**

The diamond-like carbon employed in each of the above examples and comparative example and the curing uniformity of the produced gel polymer electrolyte for secondary batteries are tested. Testing methods include:

1. Testing of electrical conductivity and heat conductivity coefficient of diamond-like carbon

Under normal temperature and pressure, the electrical conductivity test was conducted with reference to test methods for volumetric conductivity in GB/T 1410-2006.

Under normal temperature and pressure, the test for heat conductivity coefficient was conducted with reference to GB/T 32064-2015.

2. Testing of hydrogen content and sp$^3$-bonded carbon content of diamond-like carbon

The hydrogen content of the diamond-like carbon was determined by complete combustion decomposition of the diamond-like carbon and quantitative analysis of $CO_2$ and $H_2O$ produced by combustion.

Through the XPS analysis on the diamond-like carbon, different characteristic peaks contributed by different bond energies of sp$^2$ and sp$^3$ hybridization of carbon atoms were measured to be 284.4eV and 285.2eV, respectively. By splitting the XPS test peaks, the ratio of content of sp$^3$-bonded carbon could be determined according to the corresponding area ratio of the 284.4eV and 285.2eV characteristic peaks.

3. Testing of curing uniformity of gel polymer electrolyte

The produced cell was disassembled, a separator containing a cured gel polymer electrolyte was removed, the separator was placed on a stainless steel plate, and the stainless steel was connected to a counter electrode of an atomic force microscope in an electrochemical mode to form a test path. The atomic force microscope was used for taking points by a 10 $\times$ 10 dot matrix in the separator having length and width dimensions of 5 cm $\times$ 5 cm. Elasticity modulus $E_i$ of each test point was obtained through testing by means of the atomic force microscope in an mechanical mode, while AC

impedance $Z_i$ of each test point was obtained through impedance testing by means of the atomic force microscope in the electrochemical mode. The curing uniformity of the gel polymer electrolyte was evaluated based on the elasticity modulus and AC impedance measured at each test point, where distribution uniformity $A_E$ of elasticity modulus and distribution uniformity $A_Z$ of electrochemical impedance were evaluated by the following equations, respectively:

$$A_E = \frac{\sigma_E}{\overline{E}} = \frac{\sqrt{\frac{1}{100}\sum_{i=1}^{100}(E_i - \overline{E})^2}}{\frac{1}{100}\sum_{i=1}^{100} E_i},$$

$$A_Z = \frac{\sigma_Z}{\overline{Z}} = \frac{\sqrt{\frac{1}{100}\sum_{i=1}^{100}(Z_i - \overline{Z})^2}}{\frac{1}{100}\sum_{i=1}^{100} Z_i}.$$

4. Testing of ionic conductivity and electronic conductivity of gel polymer electrolyte

A cell was disassembled, a gel polymer electrolyte film was taken out and subjected to the ionic conductivity and electronic conductivity testing. The testing of ionic conductivity was carried out with reference to the standard HG/T 4067-2015, and an electrical conductivity meter was used to test resistance of the gel polymer electrolyte under the conditions of constant temperature of 25±0.1°C and AC impedance of 1 kHz, so as to calculate its electrical conductivity. The electronic conductivity of the gel polymer electrolyte may use the resistance value measured by a DC two-probe method, in which the contact area between the probes and the gel polymer electrolyte film may be set to $49\pi$ mm$^2$, e.g., resistance R of the gel polymer electrolyte film could be tested by an HIOKI BT23562 internal resistance tester. The specific operations include: the upper and lower sides of the gel polymer electrolyte film were clamped to two conductive terminals of the tester and secured by pressure, where the diameter of the conductive terminals was 14 mm, and the applied pressure was 15 MPa to 27 MPa, so as to obtain the resistance R of the gel polymer electrolyte film; and the electronic conductivity $\sigma$ of the gel polymer electrolyte was calculated according to the formula $\sigma = d/S \times (1/R)$, where S is the detection area, and the detection area is equal to the area of the conductive terminals described above in this test; and d is the thickness of a test sample between the two conductive terminals, i.e., the thickness of the gel polymer electrolyte film.

Test results of Examples 1 to 24 and Comparison Example 1 are detailed in Table 1.

Table 1 Differences and test results of Examples 1 to 14 and Comparison Example 1

| Category | Diamond-like carbon | | | Gel polymer matrix curing uniformity | |
|---|---|---|---|---|---|
| | heat conductivity coefficient/ W/mK | Range of particle size | Weight percent in precursor solution of gel polymer electrolyte | Distribution uniformity $A_E$ of elasticity modulus | Distribution uniformity $A_Z$ of electrochemical impedance |
| Example 1 | 1000 | 50nm-200nm | 2wt% | 0.11 | 0.08 |
| Comparative Example 1 | / | / | / | 0.51 | 0.34 |
| Example 2 | 600 | 50nm-200nm | 2wt% | 0.15 | 0.13 |
| Example 3 | 1500 | 50nm-200nm | 2wt% | 0.07 | 0.06 |

(continued)

| Category | Diamond-like carbon | | | Gel polymer matrix curing uniformity | |
|---|---|---|---|---|---|
| | heat conductivity coefficient/ W/mK | Range of particle size | Weight percent in precursor solution of gel polymer electrolyte | Distribution uniformity $A_E$ of elasticity modulus | Distribution uniformity $A_Z$ of electrochemical impedance |
| Example 4 | 2000 | 50nm-200nm | 2wt% | 0.04 | 0.02 |
| Example 5 | 650 | 50nm-200nm | 2wt% | 0.14 | 0.12 |
| Example 6 | 700 | 50nm-200nm | 2wt% | 0.13 | 0.1 |
| Example 7 | 750 | 50nm-200nm | 2wt% | 0.11 | 0.09 |
| Example 8 | 1000 | 50nm-200nm | 0.2wt% | 0.20 | 0.18 |
| Example 9 | 1000 | 50nm-200nm | 0.5wt% | 0.17 | 0.15 |
| Example 10 | 1000 | 50nm-200nm | 1wt% | 0.13 | 0.11 |
| Example 11 | 1000 | 50nm-200nm | 4.5wt% | 0.03 | 0.02 |
| Example 12 | 1000 | 500nm-1$\mu$m | 2wt% | 0.13 | 0.12 |
| Example 13 | 1000 | 1$\mu$m--5$\mu$m | 2wt% | 0.15 | 0.13 |
| Example 14 | 1000 | 1$\mu$m-10$\mu$m | 2wt% | 0.2 | 0.18 |

Table 2 Differences and test results of Example 2 and Examples 15 to 19

| Category | Diamond-like carbon | | | Gel polymer matrix curing uniformity | |
|---|---|---|---|---|---|
| | heat conductivity coefficient/ W/mK | Atomic percent of hydrogen | Percent of $sp^3$-bonded carbon of carbon elements | Distribution uniformity $A_E$ of elasticity modulus | Distribution uniformity $A_Z$ of electrochemical impedance |
| Example 2 | 600 | 5at% | 20at% | 0.15 | 0.13 |
| Example 15 | 1200 | 5at% | 50at% | 0.09 | 0.07 |
| Example 16 | 2000 | 5at% | 85at% | 0.04 | 0.02 |
| Example 17 | 1700 | 10at% | 85at% | 0.06 | 0.04 |
| Example 18 | 1300 | 20at% | 85at% | 0.08 | 0.05 |

(continued)

| Category | Diamond-like carbon | | | Gel polymer matrix curing uniformity | |
| --- | --- | --- | --- | --- | --- |
| | heat conductivity coefficient/ W/mK | Atomic percent of hydrogen | Percent of sp$^3$-bonded carbon of carbon elements | Distribution uniformity $A_E$ of elasticity modulus | Distribution uniformity $A_Z$ of electrochemical impedance |
| Example 19 | 550 | 50at% | 85at% | 0.17 | 0.15 |

Table 3 Differences and test results of Examples 2 and Examples 20 to 24

| Category | Diamond-like carbon conductivity / S/cm | Electrolyte in gel polymer electrolyte | |
| --- | --- | --- | --- |
| | | Ionic conductivity / S/cm | Electronic conductivity / S/cm |
| Example 2 | $1.9 \times 10^{-9}$ | $4.81 \times 10^{-3}$ | $3.7 \times 10^{-9}$ |
| Example 20 | $9.5 \times 10^{-8}$ | $4.83 \times 10^{-3}$ | $7.6 \times 10^{-8}$ |
| Example 21 | $2.5 \times 10^{-9}$ | $4.8 \times 10^{-3}$ | $3.1 \times 10^{-8}$ |
| Example 22 | $3.9 \times 10^{-11}$ | $4.79 \times 10^{-3}$ | $3.3 \times 10^{-9}$ |
| Example 23 | $6.7 \times 10^{-13}$ | $4.78 \times 10^{-3}$ | $2.9 \times 10^{-9}$ |
| Example 24 | $6.3 \times 10^{-16}$ | $4.78 \times 10^{-3}$ | $2.7 \times 10^{-9}$ |

Results and conclusion:

Combined with Examples 1 to 24 and Comparative Example 1, it can be seen that the diamond-like carbon is dispersed in the electrolyte of the gel polymer electrolyte as heat-conducting particles, which is conducive to improving the curing uniformity of the gel polymer matrix in the in-situ curing process. Moreover, the amount of diamond-like carbon added to the gel polymer electrolyte, as well as the heat conductivity coefficient, hydrogen content, sp$^3$-bonded carbon content, and change in particle size of the diamond-like carbon all have a certain influence on enhancing the improvement effect on the curing uniformity of the gel polymer matrix in the in-situ curing process. The improvement effect can be further improved by further optimizing the selection of the respective parameters.

Finally, it should be noted that the above Examples are merely used for illustrating rather than limiting the technical solutions of the present application. Although the present application has been described in detail with reference to the above various Examples, those of ordinary skill in the art should understand that the technical solutions specified in the above various Examples may still be modified, or some or all of the technical features therein may be equivalently substituted; and such modifications or substitutions do not make the essence of the corresponding technical solutions depart from the scope of the technical solutions of the various Examples of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

**Claims**

1.   A gel polymer electrolyte comprising an electrolyte, wherein heat-conducting particles are dispersed in the electrolyte and have a heat conductivity coefficient greater than or equal to 400 W/mK at 25°C.

2.   The gel polymer electrolyte according to claim 1, wherein the heat-conducting particles have an electrical conductivity not greater than 10$^{-7}$ S/cm at 25°C, and optionally 10$^{-16}$ S/cm to 10$^{-7}$ S/cm.

3.   The gel polymer electrolyte according to claim 1 or 2, wherein the heat conductivity coefficient is 400 W/mK to 2000 W/mK.

4.   The gel polymer electrolyte according to any one of claims 1 to 3, wherein the heat-conducting particles comprise diamond-like carbon.

5. The gel polymer electrolyte according to claim 4, wherein, based on the total number of atoms of the diamond-like carbon, an atomic percent of hydrogen in the diamond-like carbon is less than or equal to 50 at%, optionally less than or equal to 20 at%, and optionally less than or equal to 10 at%; and/or,
based on the total number of atoms of carbon in the diamond-like carbon, an atomic percent of $sp^3$-bonded carbon in the diamond-like carbon is 20 at% to 85 at%, and optionally 70 at% to 85 at%.

6. The gel polymer electrolyte according to any one of claims 1 to 5, wherein the heat-conducting particles have a particle size less than or equal to 10 $\mu$m.

7. The gel polymer electrolyte according to any one of claims 1 to 6, wherein, based on the total mass of the gel polymer electrolyte, a weight percent of the heat-conducting particles is 0.1 wt% to 5 wt%, and optionally 0.5 wt% to 2 wt%.

8. The gel polymer electrolyte according to any one of claims 1 to 7, wherein the gel polymer electrolyte further comprises a gel polymer matrix, and the heat-conducting particles are dispersed on the gel polymer matrix.

9. A battery, comprising the gel polymer electrolyte according to any one of claims 1 to 8.

10. The battery according to claim 9, wherein the battery further comprises a positive electrode plate, a negative electrode plate and a separator, and at least one of the positive electrode plate, the negative electrode plate and the separator comprises heat-conducting particles.

11. The battery according to claim 10, wherein the positive electrode plate comprises a positive electrode current collector and a positive electrode active material layer arranged on the positive electrode current collector, the positive electrode active material layer comprising the heat-conducting particles; and/or,
the negative electrode plate comprises a negative electrode current collector and a negative electrode active material layer arranged on the negative electrode current collector, the negative electrode active material layer comprising the heat-conducting particles; or the negative electrode plate comprises a negative electrode current collector and a heat-conducting layer arranged on the negative electrode current collector, the heat-conducting layer comprising the heat-conducting particles.

12. The battery according to claim 11, wherein the heat-conducting particles have a weight percent of 0.1 wt% to 2 wt% in the positive electrode active material layer.

13. The battery according to claim 11 or 12, wherein the heat-conducting particles have a weight percent of 0.1 wt% to 4 wt% in the negative electrode active material layer; and/or, the negative electrode active material layer comprises a silicon material, and a silicon element has a weight percent greater than or equal to 10 wt% in the negative electrode active material layer.

14. The battery according to any one of claims 11 to 13, wherein the heat-conducting layer has a thickness of 50 nm to 5 $\mu$m; and/or the heat-conducting particles have a weight percent greater than or equal to 50 wt% in the heat-conducting layer.

15. The battery according to any one of claims 11 to 14, wherein the heat-conducting layer further comprises a conductive agent and/or a binder, the conductive agent having a weight percent of 0.1 wt% to 40 wt%, and optionally 5 wt% to 15 wt% in the heat-conducting layer, and the binder having a weight percent of 0.01 wt% to 5 wt% in the heat-conducting layer.

16. The battery according to any one of claims 11 to 15, wherein the weight percent of the heat-conducting particles in the electrolyte is greater than or equal to the weight percent of the heat-conducting particles in the negative electrode active material layer; and/or the weight percent of the heat-conducting particles in the negative electrode active material layer is greater than or equal to the weight percent of the heat-conducting particles in the positive electrode active material layer.

17. An electrical apparatus, comprising the battery according to any one of claims 9 to 16.

**FIG. 1**

**FIG. 2**

**FIG. 3**

**FIG. 4**

**FIG. 5**

## INTERNATIONAL SEARCH REPORT

| | International application No. |
|---|---|
| | **PCT/CN2023/131060** |

| A. | CLASSIFICATION OF SUBJECT MATTER |
|---|---|

H01M10/0565(2010.01)i; H01M10/056(2010.01)i; H01M10/05(2010.01)n

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; ENTXT; IEEE: 凝胶, 胶体, 电解质, 类金刚石, DLC, i-碳, 氢化非晶硬碳, 导热, 传热, 热传导, 吸热, 散热, 粒子, 颗粒, 粉末, gel, colloidal, electrolyte, i-carbon, heat, conduct, transfer, endotherm, dissipation, particle, powder

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 105051963 A (SONY CORP.) 11 November 2015 (2015-11-11) description, paragraphs 0010-0019 and 0081-0142 | 1, 6-9, 17 |
| Y | CN 105051963 A (SONY CORP.) 11 November 2015 (2015-11-11) description, paragraphs 0010-0019 and 0081-0142 | 2-5, 10-16 |
| Y | 张永宏 等 (ZHANG, Yonghong et al.). "高等学校规划教材.材料科学与工程 "现代薄膜材料与技术" (Non-official translation: HIGH SCHOOL PLANNING TEXTBOOK. Materials Science and Engineering "Modern Thin Film Materials and Technologies")" 西北工业大学出版社 (NORTHWESTERN POLYTECHNICAL UNIVERSITY PRESS). 31 August 2016 (2016-08-31), text, pages 196-203, ISBN: 978-7-5612-5003-7 | 2-5 |
| Y | CN 105051941 A (SONY CORP.) 11 November 2015 (2015-11-11) description, paragraphs 0012-0023 | 10 |
| Y | US 2016308263 A1 (UCHICAGO ARGONNE, LLC.) 20 October 2016 (2016-10-20) description, paragraphs 0009-0066 and 0088, and figures 6 and 10 | 10-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 January 2024** | **25 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/131060** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 101460678 A (SIEMENS POWER GENERATION INC.) 17 June 2009 (2009-06-17)<br>entire document | 1-17 |

Form PCT/ISA/210 (second sheet) (July 2022)

# EP 4 704 205 A1

## INTERNATIONAL SEARCH REPORT
### Information on patent family members

International application No.

**PCT/CN2023/131060**

| Patent document cited in search report | | | Publication date (day/month/year) | Patent family member(s) | | | Publication date (day/month/year) |
|---|---|---|---|---|---|---|---|
| CN | 105051963 | A | 11 November 2015 | KR | 20150132128 | A | 25 November 2015 |
| | | | | KR | 102127541 | B1 | 26 June 2020 |
| | | | | US | 2016043429 | A1 | 11 February 2016 |
| | | | | US | 10084201 | B2 | 25 September 2018 |
| | | | | JP | 2014207217 | A | 30 October 2014 |
| | | | | JP | 6303412 | B2 | 04 April 2018 |
| | | | | EP | 2978060 | A1 | 27 January 2016 |
| | | | | EP | 2978060 | A4 | 02 November 2016 |
| | | | | EP | 2978060 | B1 | 06 May 2020 |
| | | | | WO | 2014147955 | A1 | 25 September 2014 |
| | | | | CN | 105051963 | B | 13 October 2017 |
| CN | 105051941 | A | 11 November 2015 | JPWO | 2014148036 | A1 | 16 February 2017 |
| | | | | JP | 6582979 | B2 | 02 October 2019 |
| | | | | EP | 2978047 | A1 | 27 January 2016 |
| | | | | EP | 2978047 | A4 | 23 November 2016 |
| | | | | EP | 2978047 | B1 | 22 November 2017 |
| | | | | WO | 2014148036 | A1 | 25 September 2014 |
| | | | | US | 2016043370 | A1 | 11 February 2016 |
| | | | | US | 10079379 | B2 | 18 September 2018 |
| | | | | EP | 3306708 | A1 | 11 April 2018 |
| | | | | EP | 3306708 | B1 | 03 July 2019 |
| | | | | CA | 2905653 | A1 | 25 September 2014 |
| | | | | CA | 2905653 | C | 23 June 2020 |
| | | | | KR | 20150131005 | A | 24 November 2015 |
| | | | | KR | 102130867 | B1 | 08 July 2020 |
| | | | | EP | 3573137 | A1 | 27 November 2019 |
| | | | | EP | 3573137 | B1 | 23 December 2020 |
| | | | | CN | 105051941 | B | 21 November 2017 |
| US | 2016308263 | A1 | 20 October 2016 | US | 9991512 | B2 | 05 June 2018 |
| CN | 101460678 | A | 17 June 2009 | US | 2006234576 | A1 | 19 October 2006 |
| | | | | US | 7651963 | B2 | 26 January 2010 |
| | | | | US | 2010108278 | A1 | 06 May 2010 |
| | | | | US | 8277613 | B2 | 02 October 2012 |
| | | | | EP | 2002055 | A2 | 17 December 2008 |
| | | | | EP | 2002055 | B1 | 14 July 2010 |
| | | | | EP | 2002055 | B2 | 19 March 2014 |
| | | | | DE | 602007007742 | D1 | 26 August 2010 |
| | | | | KR | 20090005146 | A | 12 January 2009 |
| | | | | KR | 101078126 | B1 | 31 October 2011 |
| | | | | US | 2010112303 | A1 | 06 May 2010 |
| | | | | JP | 2009532595 | A | 10 September 2009 |
| | | | | JP | 5121818 | B2 | 16 January 2013 |
| | | | | WO | 2008013570 | A2 | 31 January 2008 |
| | | | | WO | 2008013570 | A3 | 03 April 2008 |
| | | | | CN | 101460678 | B | 18 July 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 320642015 T
- GB 14102006 T

- GB 1907712016 T